# EUROPÄISCHE PATENTANMELDUNG

(11) **EP 2 283 912 A1**
(43) Veröffentlichungstag der Anmeldung: **16.02.2011**
(21) Anmeldenummer: 10405119.8
(22) Anmeldetag: 22.06.2010
(51) Int. Cl.: B01D 53/94, B01J 23/10, B01J 23/22, B01J 23/44, B01J 23/745, F01N 3/035, B01D 53/90, F01N 3/025, F01N 3/029

(54) **Verfahren und Vorrichtung zur Regeneration von Partikelfiltern**

(30) Priorität: 05.08.2009 CH 12242009
(71) Anmelder: Hochschule Rapperswil Institut für Umwelt- und Verfahrenstechnik UMTEC, 8640 Rapperswil (CH)
(72) Erfinder: Bunge, Rainer, Prof. Dr., 8849 Alpthal (CH); Bergamin, Nikolaus, Rapperswil (CH)

(57) **Zusammenfassung**

Aufgabe der Erfindung ist es, eine Vorrichtung und ein Verfahren bereitzustellen, mittels welchen ein Wandstrom-Partikelfilter bei einer typischen Abgastemperatur (180-350°C) durch die katalytische Verbrennung eines in das Abgas eingebrachten Brennstoffes bis zur Regenerationstemperatur (380-550°C) erhitzt wird, ohne dass hierfür ein dem Partikelfilter vorgeschalteter Oxidationskatalysator, oder ein in den Anströmkanälen des Partikelfilters angebrachter Oxidationskatalysator, erforderlich ist. Diese Aufgabe wird gelöst, indem der in den Abgasstrom eingebrachte Brennstoff über einen Oxidationskatalysator verbrannt wird, nachdem das Abgas durch die Oberfläche der Anströmkanäle hindurchgetreten ist. Die katalytische Verbrennung geschieht in den oxidationskatalytisch imprägnierten Wandungen (3a) des Partikelfilters und/oder in einer oxidationskatalytischen Beschichtung (3d) auf der Oberfläche der Abströmkanäle (3e). Durch die Wärmeübertragung über die Wandungen (3a) des Partikelfilters auf den in den Anströmkanälen (3c) abgelagerten Russ (3b), wird dessen Zündtemperatur überschritten.

## Beschreibung

Die Erfindung fällt in das Gebiet der Behandlung der Abgase von Magermotoren. Sie betrifft ein Verfahren und eine Vorrichtung nach den Oberbegriffen der unabhängigen Patentansprüche. Verfahren und Vorrichtung dienen zur Regeneration von Partikelfiltern.

Dieselmotoren produzieren Russpartikel, die in Filtern zurückgehalten werden können. Am effektivsten haben sich hierbei "Wandstromfilter" erwiesen, bei denen das Abgas mittels eines Systems von wechselseitig verschlossenen Anström- und Abströmkanälen durch eine poröse Wandung geführt wird. Hierbei werden die Partikel auf der Anströmseite der Wandung und in der Wandung selbst zurückgehalten. Das Abgas strömt nach Durchtritt durch die Wandung über die Abströmkanäle aus. Um eine Verstopfung des Filters durch den abgelagerten Russ zu vermeiden, muss der Filter regeneriert werden, indem der Russ oxidiert wird. Hierbei wird zwischen passiver und aktiver Regeneration unterschieden. Während die passive Regeneration bei "normaler" Abgastemperatur (180-350°C) mittels N02 geschieht, verwendet die aktive Regeneration Sauerstoff bei Temperaturen, die weit oberhalb der normalen Abgastemperatur liegen. In diesem Fall muss das Abgas "künstlich" bis zur Zündtemperatur des Russes erhitzt werden. Diese Zündtemperatur liegt bei etwa 550°C bis 600°C. Wenn der Russ mit katalytisch wirkenden Additiven versehen ist, oder auf einer katalytisch aktiven Oberfläche abgelagert wurde, kann die Zündtemperatur auf etwa 350°C bis 450°C reduziert werden. Aber auch diese Temperatur wird in vielen Motoren nicht oder nur für kurze Zeit erreicht. Eine Möglichkeit zur Abgaserhitzung auf die Zündtemperatur des Russes ist die Injektion von Brennstoff in den Abgasstrang, wobei das Abgas über einen Oxidationskatalysator geführt wird, in welchem der Brennstoff verbrannt wird- (exotherme Reaktion). Die hierzu benutzten Oxidationskatalysatoren (Diesel Oxidation Catalysts, DOC) werden in der Regel anströmseitig vor dem Partikelfilter installiert. Es gibt auch Systeme, die zusätzlich oder alternativ zum vorgeschalteten Katalysator einen in den Partikelfilter integrierten Katalysator vorsehen.

Man kann den Filter auf zweierlei Weise mit einem Katalysator versehen, mittels einer Beschichtung der Filterkanäle oder mittels Imprägnierung der Filterwände.

Im ersten Fall wird der Partikelfilter auf den Oberflächen der Anströmkanäle mit einer Trägermaterial beschichtet ("Beschichtung"), welches mit einem Oxidationskatalysator versehen ist. Der "Stand der Technik" (Juli 2009) dieser Technologie wird in www.dieselnet.com/tech/dpf_sys_fuel.html beschrieben. Oxidationskatalytische Beschichtungen der Anströmkanäle des Partikelfilters werden zur Verringerung der Zündtemperatur des darauf abgelagerten Russes verwendet. Für die Oxidation von Brennstoff sind derartige oxidationskatalytische Beschichtungen zwar ebenfalls einsetzbar, aber nicht sehr gut geeignet (denn die Russschicht bedeckt die katalytische Beschichtung).

Eine alternative Möglichkeit besteht in der Imprägnierung der porösen Wandungen des Partikelfilters mit einer katalytisch wirksamen Substanz. Hierbei wird der Filterblock in eine Lösung mit Katalysator-Vorläufersubstanzen getaucht, wobei die Lösung in die porösen Filterwände eindringt. Anschliessend werden die Katalysator-Vorläufersubstanzen thermisch zersetzt dadurch eine Imprägnierung der Filterkeramik mit katalytisch aktiven Substanzen erzielt. Bekannt sind auch Übergangsformen zwischen Imprägnierung und Beschichtung, wobei dann die Beschichtung nicht nur in den Anströmkanälen vorliegt, sondern auch in das Innere der Wandungen eindringt. Diese Methode wird zur NO2-unterstützten Oxidation von Russpartikeln, welche in die Filterwand eingedrungen sind, eingesetzt. Bislang unbekannt sind Anwendungen zur Oxidation in den Wandungen und/oder in den Abströmkanälen des Filters von Brennstoffen, die zwecks thermischer Regeneration des Partikelfilters ins Abgas eingeleitet wurden.

Aufgabe der Erfindung ist es, eine Vorrichtung und ein Verfahren bereitzustellen, mittels welchen ein Partikelfilter bei einer typischen Abgastemperatur (180-350°C) durch die katalytische Verbrennung eines in das Abgas eingebrachten Brennstoffes bis zur Regenerationstemperatur (380-550°C) erhitzt wird, ohne dass hierfür ein dem Partikelfilter vorgeschalteter Oxidationskatalysator, oder ein in den Anströmkanälen des Partikelfilters angebrachter Oxidationskatalysator erforderlich ist.

Diese Aufgabe wird gelöst, indem der in den Abgasstrom eingebrachte Brennstoff oxidationskatalytisch verbrannt wird, nachdem das Abgas durch die Oberfläche der Anströmkanäle hindurchgetreten ist. Die katalytische Verbrennung geschieht in den oxidationskatalytisch imprägnierten Wandungen des Partikelfilters und/oder in den auf der Oberfläche oxidationskatalytisch beschichteten Abströmkanälen. Durch die Wärmeübertragung über die Wandungen des Partikelfilters auf den in den Anströmkanälen abgelagerten Russ, wird dessen Zündtemperatur überschritten.

Bei der erfindungsgemässen Vorrichtung wird der Oxidationskatalysator in Richtung des Abgasstroms nach der Oberfläche der Anströmkanäle aber vor dem Austritt der Abgase aus dem Partikelfilter bereitgestellt. Dies geschieht, indem der Oxidationskatalysator entweder als Imprägnierung in den Wandungen des Partikelfilters und/oder als Beschichtung in den Abströmkanälen des Partikelfilters aufgebracht ist. Überraschend wurde bei unseren Versuchen festgestellt, dass eine katalytische Oxidation von Brennstoff nach dessen Passage durch die Oberfläche der Anströmkanäle eines Partikelfilters ohne weiteres die in den Anströmkanälen abgelagerte Russschicht bis zur Abbrandtemperatur (380°C-550°C) erhitzen kann, obwohl der Wärmetransport dem Abgasstrom entgegen gerichtet ist.

Die erfindungsgemässe Vorrichtung weist folgende Elemente auf:

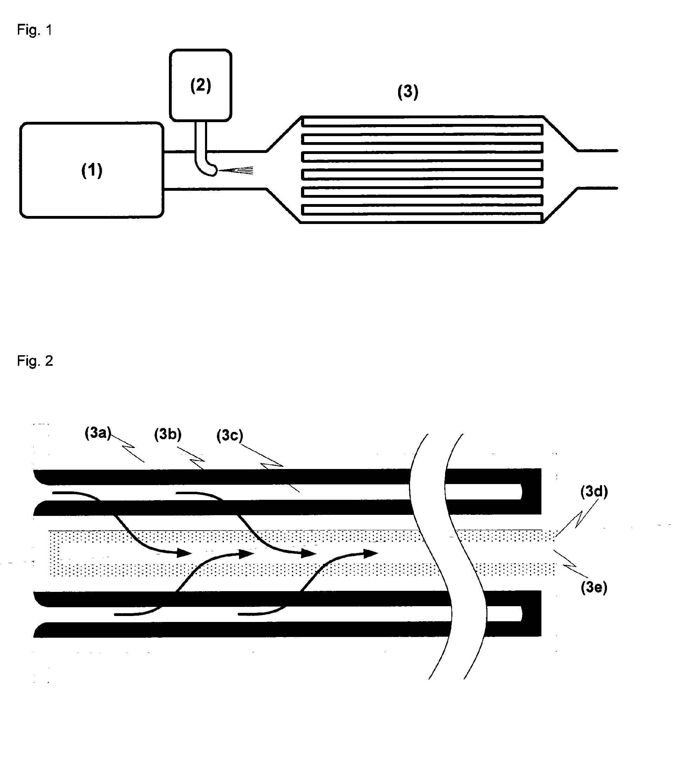

Fig. 1: Das gesamte System
   - Einen Wandstrom-Partikelfilter (3), ein Mittel zum Einbringen von Brennstoff, welches in Strömungsrichtung des Abgases vor dem Partikelfilter (3) angeordnet ist. Das Mittel zum Einbringen von Brennstoff kann, wie in Fig. 1 dargestellt, aus einer Brennstoffeinleitung (2) bestehen, oder alternativ zur Darstellung in Fig. 1 auch durch Eingriff in das Management des Motors (1) geschehen, wodurch unverbrannter Treibstoff aus dem Motor (1) ausgestossen wird.
Fig. 2: Ausschnitt aus dem Partikelfilter
   - Einen Wandstrom-Partikelfilter (3) mit porösen Wandungen (3a), welche die Anströmkanäle (3c) und Abströmkanäle (3e) begrenzen. Die Wandungen (3a) können mit einem Oxidationskatalysator imprägniert sein und/oder die Abströmkanäle (3e) sind mit einem oxidationskatalytisch aktiven Beschichtung (3d) versehen. Die Oxidationskatalysatoren für die oxidationskatalytische Imprägnierung der Wandungen (3a) und die oxidationskatalytische aktive Beschichtung (3d) können gleich oder verschieden sein.

Das Abgas wird mittels Brennstoffeinleitung (2) mit Brennstoff angereichert und durchströmt den Partikelfilter (3). Wenigstens ein Teil des Brennstoffes wird in den mit einem Oxidationskatalysator imprägnierten Wandungen (3a) und/oder in der in den Abströmkanälen (3e) aufgebrachten Beschichtung (3d) mittels des darin befindlichen Oxidationskatalysators verbrannt. Die hierbei entstehende Wärme erhitzt die porösen Wandungen (3a), wodurch die in den Anströmkanälen (3c) befindliche Russschicht (3b) bis zur Zündtemperatur erhitzt wird.

Die folgenden Ausführungen beziehen sich auf eine erste beispielhafte Ausführungsform der erfindungsgemässen Vorrichtung. Zusätzlich zu Fig. 1 ist eine katalytische Beschichtung auch auf den Anströmkanälen (3c) vorhanden, welche partiell vom Russ abgedeckt ist. Diese Beschichtung beruht auf der Basis von Eisen, Cer und Vanadium, wodurch die Zündtemperatur des Russes auf rund 450°C reduziert wird. Auf der Abstromseite ist ein Katalysator auf der Basis von Platin und Palladium eingesetzt. Diese Vorrichtung weist eine gattungsmässige Ähnlichkeit zu DE 102005063183A1 auf. Im Gegensatz zu unserer Erfindung werden in jener Schrift allerdings nur bereits im Abgas befindliche, unvollständig oxidierte, Verbrennungsprodukte in oxidationskatalytisch beschichteten Abströmkanälen nachoxidiert, ohne dass die dabei entstehende Wärme zur Regeneration des Filters verwendet wird. DE 102005063183A1 legt nicht nahe, das Abgas durch die Einleitung von Brennstoff "künstlich" zu erwärmen, indem dieser Brennstoff in den Wandungen und/oder in beschichteten Abströmkanälen des Partikelfilters oxidationskatalytisch umgesetzt wird, Das Ziel von DE 102005063183A1 ist lediglich, schädliche Abgasbestandteile zu zerstören. Zwar wird auch bei der Oxidation dieser aus dem Motor stammenden Verbrennungsabgase (HC, CO) Wärme frei, diese reicht jedoch allenfalls zu einer Temperatursteigerung von 10-20°C aus, was für eine Regeneration des Partikelfilters bei typischen Abgastemperaturen (180°C-350°C) nicht ausreichend ist.

In einer zweiten beispielhaften Ausführungsform wird der Russ mittels eines Treibstoffadditivs mit einem Katalysator auf Eisenbasis vermischt. Hierdurch reduziert sich die Abbrandtemperatur des Russes auf etwa 450°C. Um eine Regeneration bei einer Abgastemperatur (ex Motor) unterhalb 450°C zu erzwingen, wird das Abgas durch Eingriff in das Motorenmanagement mit unverbranntem Treibstoff angereichert, welcher in den Wandungen (3a) oder im Beschichtung (3d) des Partikelfilters oxidationskatalytisch verbrannt wird. Durch die entstehende Wärme wird die in den Anströmkanälen (3c) angesammelte Russschicht (3b) entzündet.

In einer dritten beispielhaften Ausführungsform wird als Brennstoff Dieseltreibstoff verwendet, welcher ins Abgas eingeleitet wird. Bei niedrigen Abgastemperaturen, z.B. bei 280°C, verdampft nur ein Teil des Treibstoffs, während der unverdampfte Anteil im Partikelfilter zurückgehalten wird. Der verdampfte Treibstoff passiert die porösen Filterwandungen und wird auf der oxidationskatalytischen Beschichtung in den Abströmkanälen verbrannt. Über die Wandungen erhitzt sich der Partikelfilterblock insgesamt, sodass auch die in den Anströmkanälen zurückgehaltenen schwerflüchtigen Dieselfraktionen verdampfen und nach Passage der porösen Wandungen in den Abströmkanälen oxidationskatalytisch verbrannt werden. Mit Vorteil wird dieses System in Kombination mit einem konventionellen DOC eingesetzt, sodass der überwiegende Teil des Treibstoffs bereits im DOC verbrannt wird und nur ein kleiner Teil des Treibstoffs noch den Filter erreicht. Durch den beschriebenen Mechanismus wird der im Filter abgesetzte Treibstoff dann nachverbrannt und dadurch der Filter zusätzlich erhitzt. Bei konventionellen Systemen (DOC) wird der Im Partikelfilter zurückgehaltene Treibstoff hingegen mit fortschreitender Erwärmung des Abgasstroms verdampft und entweicht ohne die Möglichkeit der anschliessenden Oxidation mit dem Abgas unverbrannt in die Umwelt.

Da der Wärmetransport in den porösen Wandungen (3a) in Gegenrichtung zum Abgasstrom geschieht, ist es vorteilhaft die porösen Wandungen aus einem Material herzustellen, welches eine hohe Wärmeleitfähigkeit besitzt. Bevorzugt wird hierfür Sintermetall verwendet, aber auch Siliziumcarbid und sogar Cordierit haben sich als geeignet erwiesen.

Besonders vorteilhaft ist, einen Brennstoff zu verwenden, der leichter oxidierbar ist, als Dieseltreibstoff und einen niedrigeren Siedepunkt hat. Bei unseren Versuchen haben sich Alkohole, insbesondere Glycole, hervorragend bewährt. Diese verdampfen bereits bei Temperaturen unterhalb 200°C, sodass eine Regeneration des Partikelfilters bereits bei dieser tiefen Abgastemperatur erzwungen werden kann.

Um die Emission von N02 zu minimieren und gleichwohl eine vollständige Verbrennung des Brennstoffes zu gewährleisten, wird abstromseitig in den Wandungen (3a) oder in der oxidationskatalytischen Beschichtung (3d) vorteilhaft ein Oxidationskatalysator mit einem relativen Anteil von Pd/(Pd+Pt) von wenigstens 40% eingesetzt. Die oxidationskatalytische Imprägnierung der Wandungen (3a) und die oxidationskatalytische Beschichtung (3d) kann verschieden sein. Um die Vorteile eines NO2-unterstützen Russabbrandes zu nutzen, kann zur Imprägnierung der Wandungen ein Oxidationskatalysator mit viel Platin eingesetzt werden, während der in der Beschichtung vorliegende Katalysator einen hohen Palladiumanteil aufweist. Besonders bevorzugt wird eine dreifache oxidationskatalytische Beschichtung, bei der die Anströmkanäle mit einer Beschichtung auf der Basis von Eisen, Cer oder Vanadium beschichtet sind (Verringerung der Zündtemperatur des Russes), die Wandungen mit einem Katalysator auf Platinbasis imprägniert sind (NO2-unterstützter Russabbrand und Oxidation des Brennstoffs), und die Abströmkanäle mit einer Beschichtung auf Palladiumbasis versehen sind (Oxidation des Brennstoffs ohne N02-Produktion).

## Patentansprüche

1. Verfahren zur Regeneration eines einem Magermotor (1) nachgeschalteten Wandstrom-Partikelfilters (3), wobei das Abgas mit einem Brennstoff angereichert wird (2), welcher Brennstoff durch eine oxidationskatalytische Umsetzung den im Partikelfilter (3) angesammelten Russ (3b) auf die Zündtemperatur erhitzt, **dadurch gekennzeichnet, dass** die katalytische Umsetzung des Brennstoffs stattfindet, nachdem das Abgas durch die Oberfläche der Anströmkanäle (3c) des Partikelfilters hindurchgetreten ist.

2. Verfahren nach Anspruch 1 **dadurch gekennzeichnet, dass** die oxidationskatalytische Umsetzung des Brennstoffs in einer oxidationskatalytischen Beschichtung stattfindet, mit welcher die Abströmkanäle des Partikelfilters beschichtet sind.

3. Verfahren nach Anspruch 1 **dadurch gekennzeichnet, dass** die oxidationskatalytische Umsetzung des Brennstoffs innerhalb der Wandungen des Partikelfilters, welche oxidationskatalytisch imprägniert sind, stattfindet.

4. Verfahren nach einem der Ansprüche 2 oder 3 **dadurch gekennzeichnet, dass** das Abgas auch in den Anströmkanälen eine mit einem Oxidationskatalysator imprägnierte Beschichtung überströmt, welcher Oxidationskatalysator verschieden ist von dem Oxidationskatalysator mit welchem die Wandungen des Partikelfilters imprägniert sind und/oder dem Oxidationskatalysator in der oxidationskatalytischen Beschichtung der Abströmkanäle.

5. Verfahren nach einem der Ansprüche 1 bis 4 **gekennzeichnet dadurch, dass** der Treibstoff des Magermotors oder dessen Verbrennungsprodukte als Brennstoff verwendet werden.

6. Verfahren nach einem der Ansprüche 1 bis 4 **dadurch gekennzeichnet, dass** ein vom Treibstoff des Magermotors oder dessen Verbrennungsprodukten verschiedener Brennstoff verwendet wird, insbesondere ein Alkohol, vorzugsweise ein Glycol.

7. Vorrichtung zur Regeneration eines einem Magermotor (1) nachgeschalteten Wandstrom-Partikelfilters (3), welche Vorrichtung einen Wandstrom-Partikelfilter (3) enthält und ein davor installiertes Mittel zur Anreicherung des Abgases mit Brennstoff (2) enthält, und einen vom Abgas überströmten Oxidationskatalysator enthält, **dadurch gekennzeichnet, dass** der Oxidationskatalysator in den Wandungen des Partikelfilters (3a) und/oder in einer oxidationskatalytischen Beschichtung (3d) auf den Abströmkanälen (3e) des Partikelfilters vorliegt.

8. Vorrichtung nach Anspruch 7 **dadurch gekennzeichnet, dass** der Oxidationskatalysator Palladium und Platin enthält, wobei der Palladiumanteil Pd/(Pd+Pt) wenigstens 40% beträgt, bevorzugt wenigstens 60%.

9. Vorrichtung nach einem der Ansprüche 7 oder 8 **dadurch gekennzeichnet, dass** die porösen Wandungen des Partikelfilters aus einem Material bestehen, welches eine im Vergleich zu Cordierit höhere Wärmeleitfähigkeit aufweist, vorzugsweise aus Sintermetall oder Siliziumcarbid.

10. Vorrichtung nach einem der Ansprüche 7 bis 9 **gekennzeichnet dadurch, dass** auch auf der Oberfläche der Anströmkanäle des Partikelfilters ein Oxidationskatalysator angebracht ist.

11. Vorrichtung nach Anspruch 10 **gekennzeichnet dadurch, dass** der in den Anströmkanälen des Partikelfilters angebrachte Oxidationskatalysator gleich ist, wie der Oxidationskatalysator mit welchem die Wandungen des Partikelfilters imprägniert sind und/oder der Oxidationskatalysator, welcher in der oxidationskatalytischen Beschichtung auf den Abströmkanälen des Partikelfilters vorliegt.

12. Vorrichtung nach Anspruch 10 **gekennzeichnet dadurch, dass** der in den Anströmkanälen des Partikelfilters angebrachte Oxidationskatalysator unterschiedlich ist, von dem Oxidationskatalysator mit dem die Wandungen des Partikelfilters imprägniert sind und/oder von dem Oxidationskatalysator, der in der oxidationskatalytischen Beschichtung auf den Abströmkanälen des Partikelfilters vorliegt.

13. Vorrichtung nach Anspruch 12 **gekennzeichnet dadurch, dass** der in den Anströmkanälen des Partikelfilters vorliegende Katalysator auf der Wirkung von einem oder mehreren der folgenden Elemente beruht: Eisen, Cer, Vanadium.

14. Vorrichtung nach einem der Ansprüche 7 bis 13 **dadurch gekennzeichnet, dass** das Mittel zur Anreicherung des Abgases mit Brennstoff (2) mit einem Tank verbunden ist, in dem sich ein Brennstoff mit einem Siedepunkt unterhalb 220°C befindet, bevorzugt ein Alkohol, und besonders bevorzugt ein Glycol.
